# EUROPÄISCHE PATENTANMELDUNG

(11) **EP 1 593 422 A2**
(43) Veröffentlichungstag der Anmeldung: **09.11.2005**
(21) Anmeldenummer: 05009860.7
(22) Anmeldetag: 04.05.2005
(51) Int. Cl.: B01D 53/86, B01D 53/90

(54) **Verfahren und Vorrichtung zum Abtrennen von Öl und flüchtigen organischen Bestandteilen aus Druckgasen einer Verdichtungsanlage**

(30) Priorität: 05.05.2004 DE 102004022090
(71) Anmelder: Bauer Kompressoren Heinz Bauer, 81479 München (DE)
(72) Erfinder: Bauer, Heinz, 81479 München (DE)
(74) Vertreter: Hering, Hartmut

(57) **Zusammenfassung**

Es werden ein Verfahren und eine Vorrichtung zum Abtrennen von Öl und flüchtigen, organischen Bestandteilen aus Druckgasen einer Verdichtungsanlage angegeben, bei denen eine oxidationskatalytischen Abtrennung vorgenommen wird, wobei zum Schutz der oxidationskatalytischen Abtrennbehandlung in der hierfür bestimmten Einrichtung vor einer gegebenenfalls schwallartig großen mitgeführten Ölmenge in den Druckgasen vor der oxidationskatalytischen Abtrennung eine nicht chemische oder physikalische Abscheidung vorgenommen wird. Das bei dieser nicht chemischen oder physikalischen Ölabscheidung abgeschiedene und anfallende Öl wird dann dosiert wiederum in den zur oxidationskatalytische Abtrennung strömenden Druckgasstrom eingespeist. Somit wird erreicht, dass die Öl-Konzentration in dem Druckgas vor dem Eintritt in die oxidationskatalytischen Abtrenneinrichtung in einer solchen Weise eingehalten werden kann, dass die oxidationskatalytischen Abtrennung effektiv und unter optimalen Arbeitsbedingungen durchgeführt werden kann, ohne dass eine Funktionsbeeinträchtigung durch momentan plötzlich hohe Ölkonzentrationen vorhanden ist. Durch die Erfindung ist somit die oxidationskatalytische Abtrenneinrichtung vor Überlastungen und Beschädigungen geschützt.

## Beschreibung

Die Erfindung befaßt sich auf mit einem Verfahren und einer Vorrichtung zur Abtrennung von Öl und flüchtigen, organischen Bestandteilen aus Druckgasen einer Verdichtungsanlage.

Bei neueren Entwicklungen auf dem Gebiet der weitgehend kondensat- und ölfreien Druckluft als Beispiel eines Druckgases ist es bekannt, eine oxidationskatalytische Abtrennung von Ölspuren und flüchtigen, organischen Bestandteilen aus Druckgasen einzusetzen, so dass hierbei ein physikalisch-chemischer Prozeß zur Anwendung kommt. Bei Verdichtungsanlagen kommt es aber vor, dass, aus welchen Gründen auch immer, plötzlich und stoßweise große Ölmengen in dem Druckluftstrom mitgeführt werden, welcher von der Verdichtungsanlage kommt. In einem solchen Fall besteht die Gefahr, dass die oxidationskatalytische Abtrenneinrichtung überfordert ist und derartig große Ölmengen nicht mehr ausreichend in Wasser und weitere, unschädliche Luftbestandteile umwandeln kann. Auch besteht hierbei die Gefahr, dass der Oxidationskatalysator beschädigt wird, und somit ein komplettes Auswechseln der oxidationskatalytischen Abtrenneinrichtung erforderlich wird, was teuer und aufwendig ist.

Die Erfindung zielt daher darauf ab, ein Verfahren und eine Vorrichtung der gattungsgemäßen Art bereitzustellen, welche einen wirksamen Schutz vor derartigen, meist schwallweise anfallenden, mitgerissenen Ölmengen in der Druckluft bietet.

Nach der Erfindung wird hierzu einerseits ein Verfahren zum Abtrennen von Öl und flüchtigen, organischen Bestandteilen aus Druckgasen einer Verdichtungsanlage bereitgestellt, bei dem eine oxidationskatalytische Abtrennung erfolgt, wobei hierbei insbesondere für stoßweise in der Druckluft mitgeführte große Ölmengen vor der oxidationskatalytischen Abtrennung eine nicht chemische (physikalische) Ölabscheidung vorgenommen wird, und dass hierbei abgeschiedenes und anfallendes Öl dosiert in den zur oxidationskatalytischen Abtrenneinrichung strömenden Druckluftstrom eingespeist wird.

Ferner wird nach der Erfindung auch eine Vorrichtung zur Abtrennung von Öl und flüchtigen, organischen Bestandteilen aus Druckgasen einer Verdichtungsanlage bereitgestellt, welche eine oxidationskatalytische Abtrenneinrichtung hat, wobei sich die Vorrichtung dadurch auszeichnet, dass eine der oxidationskatalytischen Abtrenneinrichtung vorgeschaltete, nicht chemisch arbeitende (physikalisch arbeitende) Ölabscheideeinrichtung und eine Einrichtung zum dosierten Einspritzen des abgeschiedenen Öls in den zur oxidationskatalytischen Abtrenneinrichtung führenden Druckgasstrom (Druckluftstrom) vorgesehen sind.

Weitere erfindungswesentliche Einzelheiten, insbesondere in vorrichtungstechnischer Hinsicht, sind in den Ansprüchen 3 bis 6 wiedergegeben.

Wenn bei dem erfindungsgemäßen Verfahren und der erfindungsgemäßen Vorrichtung ein Ölschwall in dem von der Verdichtungsanlage kommenden Druckgasstrom mitgeführt wird, so wird nach der Erfindung ein wirksamer Schutz vor Beschädigungen der oxidationskatalytischen Abtrenneinrichtung dadurch erreicht, dass vor der katalytischen Abtrennung eine nicht chemische oder physikalische Ölabscheidung erfolgt. Das hierbei anfallende und abgeschiedene Öl wird dann wieder anschließend, aber in dosierter Weise, in den Druckgasstrom eingespeist, welcher zu der oxidationskatalytischen Abtrennbehandlung führt. Hierdurch lassen sich auf wirksame Weise Überbelastungen und Beschädigungen im Bereich der oxidationskatalytischen Abtrennung vermeiden.

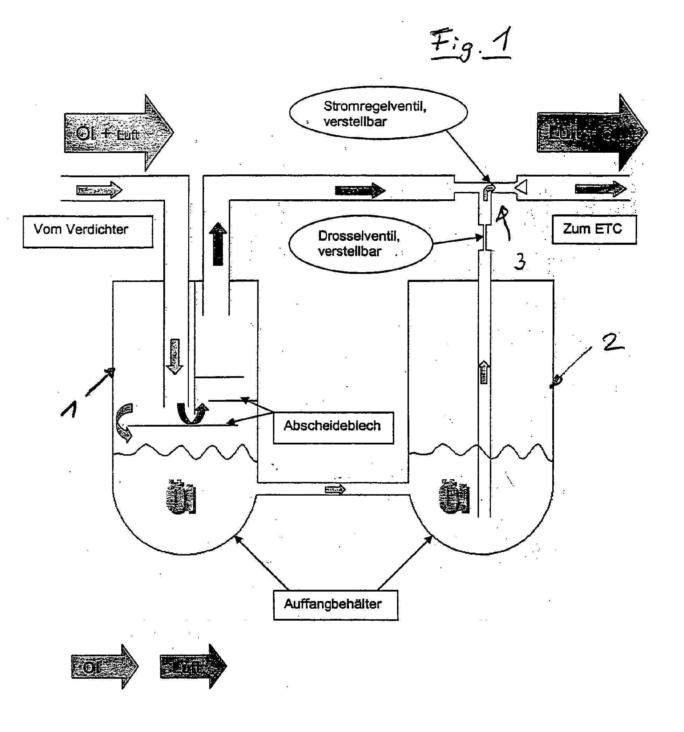

Weitere Einzelheiten, Merkmale und Vorteile der Erfindung ergeben sich aus der nachstehenden Beschreibung einer bevorzugten Ausführungsform unter Bezugnahme auf die beigefügte Zeichnung.

Die einzige Figur der Zeichnung zeigt schematisch eine Vorrichtung zur Abtrennung von Öl und flüchtigen, organischen Bestandteilen aus Druckgasen einer Verdichtungsanlage.

Wie dort schematisch mit Pfeilen dargestellt ist, kommt von einer nicht näher dargestellten Verdichtungsanlage einer Druckgasstrom oder ein Druckluftstrom, welcher prozeßbedingt Öl und flüchtige, organische Bestandteile mitführt. Die Verdichtungsanlage ist dort nicht näher dargestellt und kann von einer üblichen Verdichtungsanlage gebildet werden, welche einstufig oder mehrstufig ausgelegt sein kann.

Dieser Druckgasstrom (Druckluftstrom) wird nach der Erfindung vor einer mit ETC bezeichneten oxidationskatalytischen Abtrenneinrichtung in eine nicht chemisch oder physikalisch arbeitende Ölabscheideeinrichtung 1 eingeleitet, welche beim dargestellten Beispiel von einem Behälter gebildet wird, in welchen der mit Öl beladene Druckluftstrom eingeleitet und durch entsprechende Umlenkung, beispielsweise mittels Abscheideblechen, eine Abscheidung des Öls aus dem Druckluftstrom erfolgt. Dieses Öl sammelt sich am Bodenbereich der nicht chemisch arbeitenden Ölabscheideeinrichtung 1. Der Ölsumpf am Bodenbereich der Öläbscheideeinrichtung 1 ist kommunizierend mit einem zweiten Behälter 2 und dessen Bodenbereich verbunden, so dass auch in dem zweiten Behälter 2 am Bodenbereich sich eine vorbestimmte Ölmenge sammelt. Der Druckluftstrom, von dem durch den Ölabscheider 1 Öl abgeschieden worden ist, verlässt beispielsweise den ersten Behälter der Ölabscheideeinrichtung an seiner Oberseite und wird dann zur oxidationskatalytischen Abtrenneinrichtung ETC geleitet. Der zweite Behälter 2 hat an seinem Ausgang eine insgesamt mit 3 bezeichnete Einrichtung zum dosierten Einspeisen des zuvor mechanisch oder physikalisch abgeschiedenen Öls in den zur oxidationskatalytischen Abtrenneinrichtung ETC führenden Druckluftstrom. Die dosierte Öleinspeisung kann hierbei pulsweise oder kontinuierlich erfolgen. Zur dosierten Öleinspeisung kann ein Magnetventil oder eine Düse vorgesehen sein. Die dosierte Öleinspeisung kann basierend auf dem Differenzdruck oder nach dem Venturi-Prinzip erfolgen. Nach der dosierten Einspeisung des Öls in den Druckluftstrom wird dieser dann zur oxidationskatalytischen Abtrenneinrichtung ETC geleitet, in welcher auf an sich übliche Weise eine oxidafionskatalytische Abtrennung von Öl und flüchtigen, organischen Bestandteilen auf physikalisch-chemische Weise erfolgt.

Zusammenfassend werden nach der Erfindung ein Verfahren und eine Vorrichtung zum Abtrennen von Öl und flüchtigen, organischen Bestandteilen aus Druckgasen einer Verdichtungsanlage angegeben, bei denen eine oxidationskatalytischen Abtrennung vorgenommen wird, wobei zum Schutz der oxidationskatalytischen Abtrennbehandlung in der hierfür bestimmten Einrichtung vor einer gegebenenfalls schwallartig großen mitgeführten Ölmenge in den Druckgasen vor der oxidationskatalytischen Abtrennung eine nicht chemische oder physikalische Abscheidung vorgenommen wird. Das bei dieser nicht chemischen oder physikalischen Ölabscheidung abgeschiedene und anfallende Öl wird dann dosiert wiederum in den zur oxidationskatalytischen Abtrennung strömenden Druckgasstrom eingespeist. Somit wird erreicht, dass die Öl-Konzentration in dem Druckgas vor dem Eintritt in die oxidationskatalytische Abtrenneinrichtung in einer solchen Weise eingehalten werden kann, dass die oxidationskatalytische Abtrennung effektiv und unter optimalen Arbeitsbedingungen durchgeführt werden kann, ohne dass eine Funktionsbeeinträchtigung durch momentan plötzlich hohe Ölkonzentrationen vorhanden ist. Durch die Erfindung ist somit die oxidationskatalytische Abtrenneinrichtung vor Überlastungen und Beschädigungen geschützt.

## Patentansprüche

1. Verfahren zum Abtrennen von Öl und flüchtigen, organischen Bestandteilen aus Druckgasen einer Verdichtungsanlage, bei dem eine oxidationskatalytische Abtrennung erfolgt, **dadurch gekennzeichnet, dass** bei insbesondere stoßweise (schwallweise) in dem Druckgas mitgeführten großen Ölmengen vor der oxidationskatalytischen Abtrennung eine nicht chemische (physikalische) Ölabscheidung vorgenommen wird, und das hierbei abgeschiedene, anfallende Öl dosiert in den zur oxidationskatalytischen Abtrennung strömenden Druckgasstrom eingespeist wird.

2. Vorrichtung zur Abtrennung von Öl und flüchtigen, organischen Bestandteilen aus Druckgasen einer Verdichtungsanlage mit einer oxidationskatalytischen Abtrenneinrichtung (ETC), **gekennzeichnet durch** eine der oxidationskatalytischen Abtrenneinrichtung (ETC) vorgeschalteten, nicht chemisch arbeitende (physikalisch arbeitende) Ölabscheideeinrichtung (1), und eine Einrichtung (3) zum dosierten Einspeisen des abgeschiedenen Öls in den zur oxidationskatalytischen Abtrenneinrichtung (ETC) führenden Druckgasstrom (Druckluftstrom).

3. Vorrichtung nach Anspruch 2, **dadurch gekennzeichnet, dass** die nicht chemisch arbeitende Ölabscheideeinrichtung (1) einen ersten Behälter zur Ölabscheidung aufweist, welcher kommunizierend mit seinem Ölsammelbereich in einem zweiten Behälter (2) in Verbindung steht, welcher eine dosierte Ölabgabe in den zur oxidationskatalytischen Abtrenneinrichtung (ETC) führenden Druckgasstrom gestattet.

4. Vorrichtung nach Anspruch 2 oder 3, **dadurch gekennzeichnet, dass** die dosierte Öleinspeisung pulsweise oder kontinuierlich erfolgt.

5. Vorrichtung nach einem der Ansprüche 2 bis 4, **dadurch gekennzeichnet, dass** die dosierte Öleinspeisung mittels eines Magnetventils oder einer Düse erfolgt.

6. Vorrichtung nach einem der Ansprüche 2 bis 5, **dadurch gekennzeichnet, dass** die dosierte Öleinspeisung basierend auf dem Differenzdruck oder nach dem Venturi-Prinzip erfolgt.
